# FASCICULE DE BREVET EUROPEEN

(11) **EP 2 567 208 B1**
(45) Date de publication et mention de la délivrance du brevet: **20.06.2018**
(21) Numéro de dépôt: 11731014.4
(22) Date de dépôt: 14.04.2011
(51) Int. Cl.: G01M 11/02, G01N 21/84

(54) **DISPOSITIF DE DEMONSTRATION ET DE TEST DE L'EFFICACITE D'UN TRAITEMENT ANTI REFLET D'UNE LENTILLE OPHTALMIQUE**
VORRICHTUNG ZUM VORZEIGEN UND TESTEN DER WIRKSAMKEIT EINER ANTIREFLEXIONSBEHANDLUNG EINER OPHTHALMISCHEN LINSE
DEVICE FOR DEMONSTRATING AND TESTING THE EFFICACY OF AN ANTIREFLECTION TREATMENT OF AN OPHTHALMIC LENS

(30) Priorité: 05.05.2010 FR 1053517
(43) Date de publication de la demande: 13.03.2013
(73) Titulaire: Essilor International, 94220 Charenton-le-Pont (FR)
(72) Inventeur: NADOLNY, Carole, F-94220 Charenton-le-Pont (FR); CALANDRINI, Fabien, F-94220 Charenton-le-Pont (FR); FAUQUIER, Catherine, F-94220 Charenton-le-Pont (FR)
(74) Mandataire: Lenne, Laurence
(86) Numéro de dépôt international: PCT/FR2011/050868
(87) Numéro de publication internationale: WO 2011/138536

(56) Documents cités:
- WO-A1-2008/023134
- DE-A1-102007 028 364
- FR-A1- 2 932 566
- FR-A1- 2 941 056
- US-A- 2 566 058
- US-A- 6 113 238
- US-A1- 2008 124 699
- US-B1- 7 621 750

## Description

L'invention concerne un dispositif de démonstration et de test comparatif de l'efficacité d'un traitement antireflet d'une lentille ophtalmique.

Il existe des dispositifs de mesure des propriétés optiques d'un traitement anti reflet au moyen d'un système de mesure de réflexion de type spectromètre complexe. Ces propriétés optiques sont la réflexion moyenne Rₘ, la réflexion visuelle Rᵥ, la chroma C et l'angle de teinte h.

Il existe également un procédé de démonstration de l'efficacité d'un traitement antireflet grâce auquel la performance d'une lentille pourvue d'un traitement antireflet est comparée à une lentille dépourvue d'un tel traitement, au moyen d'une image droite et d'une image gauche réfléchies sur des lentilles ophtalmiques droite et gauche portées par un porteur au moyen d'une monture de lunettes et dont l'une est donc pourvue d'un traitement anti reflet et l'autre dépourvue d'un tel traitement. Le reflet de ces images est visualisé par le porteur lorsqu'il se regarde dans un miroir central ou bien par un observateur. Le porteur ou l'observateur compare la différence d'efficacité d'antireflet entre les deux lentilles.

Ce type de procédé n'est lié à aucun protocole et est donc relativement imprécis et aléatoire dans la mesure où il dépend des conditions d'observation.

Dans le document WO2008/023134, un observateur peut tester l'efficacité d'un traitement antireflet en observant une lentille disposée devant un texte et dont la face supérieure est directement éclairée par une source lumineuse. Par ailleurs, le document de brevet US 2008/0124699 décrit un dispositif de démonstration comportant une pièce comportant une première face de support d'une image et une deuxième face de support d'un miroir qui est semi réfléchissant.

Ce dispositif est destiné à montrer l'effet des lentilles polarisées ou lentilles dites réduisant les « lueurs » polarisées. La lumière peut être polarisée naturellement lorsqu'un rayon de lumière est réfléchi, avec un angle d'incidence égal à l'angle de Brewster, sur une surface plane, par exemple sur le sol ou un plan d'eau, et elle devient polarisée linéairement. De telles lentilles, grâce à leur axe de polarisation perpendiculaire, éliminent cette lumière réfléchie ou « lueur » perçue par le porteur de lentille.

Selon ce document, en l'absence de lentilles polarisées, le porteur visualise d'une part une première image non polarisée placée derrière le miroir constitué d'un film semi réfléchissant, et d'autre part une seconde image qui est quant à elle polarisée horizontalement après réflexion sur le film semi réfléchissant. Lorsque le porteur visualise le démonstrateur en utilisant les lentilles polarisées perpendiculairement à l'axe de polarisation de la seconde image, l'effet filtrant polarisant de la lentille permet de s'affranchir de la seconde image et le porteur ne visualise que la première image.

Ce dispositif spécifiquement adapté au test de lentilles polarisées ne permet pas de tester l'efficacité d'un traitement antireflet, qui consiste à atténuer les reflets sur la face de la lentille visibles de l'extérieur par des personnes externes et non pas par le porteur.

L'objet de l'invention, tout autre, est de proposer un dispositif de démonstration et de test de l'efficacité d'un traitement antireflet d'une lentille ophtalmique, qui tout en comportant également une pièce comportant une première face de support d'une image et une deuxième face de support d'un miroir qui est semi réfléchissant, est spécifiquement étudié dans un tel but.

Ce dispositif est simple à utiliser, peut servir tout autant de démonstrateur pour opticiens que de matériel d'instrumentation et peut être utilisé aisément par une personne béotienne. Ce dispositif permet d'évaluer des différences de réflexion visuelle Rᵥ entre deux antireflets inférieures à 0,5%.

Pour ce faire, l'invention propose un dispositif de démonstration et de test de l'efficacité d'un traitement antireflet d'une lentille ophtalmique comportant une pièce comportant une première face de support d'une image et une deuxième face de support d'un miroir qui est semi réfléchissant, caractérisé en ce que ladite image est rétro-éclairée par une source de lumière, ladite deuxième face forme un angle d'au moins 90° par rapport à ladite première face et est disposée en face d'une troisième face de positionnement d'au moins une lentille ophtalmique avec sa face concave tournée vers l'extérieur, pourvue d'un agencement de positionnement de ladite lentille comprenant au moins un orifice agencé sur ladite troisième face, le dispositif comportant également un texte sur support transparent derrière ledit miroir et une face de couleur uniforme derrière ledit texte, de sorte que, lorsqu'un utilisateur regarde au travers dudit orifice et de ladite lentille, il visualise le reflet résultant de ladite image sur ladite lentille au moyen dudit miroir, se superposant audit texte et à ladite face de couleur uniforme

Grâce au fait que la deuxième face de support du miroir semi réfléchissant forme un angle d'au moins 90° par rapport à la première face portant l'image et grâce à l'agencement de positionnement de la lentille, l'image se reflète directement sur la lentille et c'est ce reflet plus ou moins important selon l'efficacité du traitement antireflet porté par la lentille, qui est ensuite réfléchi par le miroir, venant se superposer au texte porté par la première face.

De plus, afin d'obtenir un dispositif efficace, l'image est rétro-éclairée par une source de lumière, afin d'augmenter l'intensité du reflet de cette image sur la lentille et de s'assurer de tester correctement le traitement antireflet.

Enfin, par l'utilisation d'un texte derrière le miroir semi réfléchissant, l'utilisation du dispositif de test est particulièrement efficace et aisé, amenant une action de lecture du testeur et un résultat de test clairement déterminable selon la possibilité, la difficulté ou l'impossibilité de lecture du texte.

L'invention concerne également une utilisation d'un tel dispositif, caractérisée en ce qu'elle consiste à positionner une lentille pourvue sur une première moitié d'un premier traitement antireflet et pourvue sur une seconde moitié d'un second traitement antireflet, sur ledit orifice, avec sa face concave tournée vers l'extérieur, à regarder au travers de la lentille et à déterminer la gêne provoquée par la visualisation du reflet résultant sur ledit miroir lors de la lecture dudit texte, pour comparer le niveau de réflexion du reflet de ladite image réfléchie sur ladite première moitié et sur ladite seconde moitié.

L'invention est décrite ci-après plus en détail à l'aide de figures ne représentant que des modes de réalisation préférés de l'invention.
La figure 1 est une vue en coupe verticale d'un dispositif de démonstration et de test de l'efficacité d'un traitement antireflet d'une lentille ophtalmique conforme à l'invention.
La figure 2 est une vue éclatée en perspective de ce dispositif.
La figure 3 est une vue de détail.

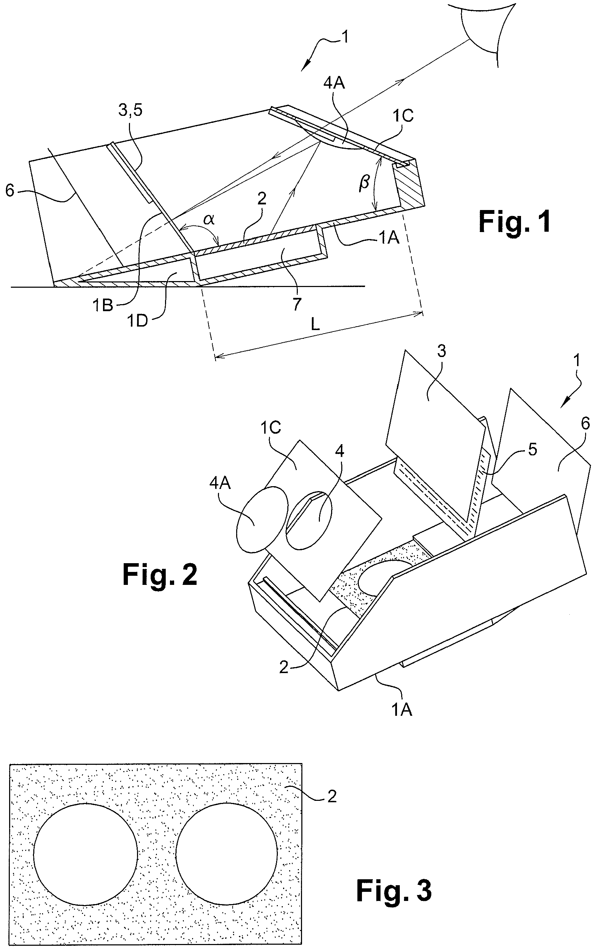

Les figures 1 et 2 illustrent un dispositif 1 de démonstration et de test de la qualité d'un traitement antireflet d'une lentille ophtalmique.

Ce dispositif 1 comporte une pièce en matière plastique transparente constituée d'un profilé en U, dont la base constitue une première face de support 1A d'une image 2 collée à cette face et rétro-éclairée par une source de lumière 7, et dont les branches supportent une deuxième face de support 1B d'un miroir semi réfléchissant 3, de préférence un miroir sans tain présentant une réflexion visuelle Rᵥ d'environ 55%, formant un angle d'au moins 90° par rapport à la première face 1A et une troisième face de positionnement 1C d'au moins une lentille ophtalmique 4A, située en face de la deuxième face 1B et pourvue d'un agencement de positionnement de la lentille comprenant au moins un orifice, sur cette troisième face 1C et par exemple une cornière de pose agencée sous l'orifice 4 agencé sur la troisième face. La lentille ophtalmique est disposée avec sa face concave tournée vers l'extérieur.

Cet orifice 4 est circulaire et a un diamètre d'environ 50 mm.

La troisième face 1C est dépolie, afin d'éviter des reflets parasites sur le miroir 3.

Le dispositif 1 comporte également un texte 5, de préférence de couleur noire, sur support transparent disposé derrière le miroir semi-réfléchissant 3 et une face de couleur uniforme, de préférence de couleur blanche 6 de contraste maximal avec le texte, derrière le miroir, de sorte que, lorsqu'un utilisateur regarde au travers de l'orifice 4 et de la lentille 4A, il visualise le reflet résultant de l'image 2 sur la lentille au moyen dudit miroir, se superposant au texte et à la face de couleur blanche.

La face de couleur blanche 6 peut être disposée contre le miroir 3 ou en être espacée comme illustrée sur la figure 1.

Le miroir semi réfléchissant 3, de préférence sous forme de film, permet d'observer le texte 5, en transmission, et d'observer également le reflet de l'image 2 sur la lentille 4A, en réflexion.

La deuxième face 1B est de préférence inclinée d'un angle α d'environ 110° par rapport à la première face 1A. La troisième face est inclinée de préférence d'un angle β compris entre 40° et 60° par rapport à la première face. La longueur L de la première face 1A entre la deuxième face 1B et la troisième face 1C est comprise entre 15 et 30 cm et de préférence d'environ 17 cm.

La pièce 1 comporte également de préférence un contre poids 1D assurant son inclinaison comme illustré sur la figure 1, afin d'assurer un positionnement confortable par rapport à un observateur, quand elle est posée sur une surface horizontale. Des pieds réglables peuvent être installés en avant de la pièce 1 afin de pouvoir régler l'inclinaison du dispositif par rapport à une table support et améliorer le confort de lecture ou s'adapter à la taille de l'utilisateur. Une observation confortable peut correspondre à environ un angle de 15° par rapport à un plan horizontal.

L'image 2 représentée sur la figure 3 présente un fond noir et mat et deux motifs blancs et mats, d'un contraste de 100%. Le motif est de préférence de forme neutre, non illustratif, comme par exemple deux disques. Les deux disques sont symétriques par rapport au plan de symétrie central du dispositif. La forme neutre permet à l'observateur de se concentrer sur la lecture du texte sans être influencé par la forme du reflet.

Ces motifs sont réalisés sur un support translucide et une source de lumière 7 est disposée sous la première face, sous le motif. A titre d'exemple, deux mini-lampes néons d'une puissance de 3 W peuvent être utilisées. Les lampes ont pour effet d'augmenter l'intensité lumineuse du reflet de l'image 2 sur la lentille. L'intensité des lampes peut être ajustable.

Grâce au choix des dimensions de la pièce 1 et de l'image 2 et au choix de l'intensité des lampes, le reflet de l'image 2 est de taille et d'intensité suffisante pour que l'observateur aperçoive le reflet de l'image 2 réfléchie sur la lentille, pourvue sur une première moitié d'un premier traitement antireflet et pourvue sur une seconde moitié d'un second traitement antireflet, le traitement antireflet de moindre efficacité présentant un reflet de cette image plus visible. Ce reflet perçu est ainsi d'une dimension de l'ordre de 1 à 3 cm.

Le choix d'un verre traité avec deux antireflets différents sur chaque moitié facilite l'évaluation de la différence d'intensité du reflet de l'image sur chaque traitement antireflet.

L'utilisation du dispositif consiste à positionner une lentille pourvue sur une première moitié d'un premier traitement antireflet et pourvue sur une seconde moitié d'un second traitement antireflet, sur ledit orifice, avec sa face concave tournée vers l'extérieur. La séparation entre les deux moitiés est positionnée verticalement par rapport au dispositif. L'observateur regarde de façon binoculaire au travers de la lentille et détermine la gêne provoquée par la visualisation du reflet résultant sur ledit miroir lors de la lecture dudit texte, pour comparer le niveau de réflexion du reflet de ladite image réfléchie sur ladite première moitié et sur ladite seconde moitié.

L'utilisation est effectuée dans un environnement bien éclairé, de préférence la lumière du jour, à une intensité lumineuse d'environ 205 Lux.

Les modes de réalisation décrits comportent une image 2 plane.

Cette image est de préférence centrée sur le plan vertical contenant la direction du regard de l'observateur et, dans le mode de réalisation représenté, elle est centrée sur le plan de symétrie contenant le centre de l'orifice de positionnement de la lentille, en supposant l'observateur situé juste devant la lentille.

Le miroir 3 est un miroir plan, de préférence de forme symétrique carré ou rond. Il est centré sur l'orifice de positionnement de la lentille.

La lentille peut être posée sur la troisième face 1C comme précédemment décrit ou être solidarisée par exemple par collage sur cette face.

Afin de ne pas perturber la visualisation au travers de la lentille, cette dernière est de préférence afocale plano-sphérique.

## Revendications

1. Dispositif de démonstration et de test de l'efficacité d'un traitement antireflet d'une lentille ophtalmique comportant une pièce (1) comportant une première face (1A) de support d'une image (2) et une deuxième face (1B) de support d'un miroir (3) qui est semi réfléchissant, **caractérisé en ce que** ladite image (2) est rétro-éclairée par une source de lumière (7), ladite deuxième face (1B) forme un angle d'au moins 90° par rapport à ladite première face et est disposée en face d'une troisième face (1C) de positionnement d'au moins une lentille ophtalmique (4A) avec sa face concave tournée vers l'extérieur, pourvue d'un agencement de positionnement de ladite lentille comprenant au moins un orifice (4) agencé sur ladite troisième face, le dispositif comportant également un texte (5) sur support transparent derrière ledit miroir et une face de couleur uniforme (6) derrière ledit texte, de sorte que, lorsqu'un utilisateur regarde au travers dudit orifice (4) et de ladite lentille (4A), il visualise le reflet résultant de ladite image (2) sur ladite lentille (4A) au moyen dudit miroir (3), se superposant audit texte (5) et à ladite face de couleur uniforme (6).

2. Dispositif selon la revendication 1, **caractérisé en ce que** ledit texte est de couleur noire et ladite face est de couleur blanche.

3. Dispositif selon l'une des revendications précédentes, **caractérisé en ce que** ladite pièce (1) est un profilé en U, dont les branches supportent ladite deuxième face (1B) et de ladite troisième face (1C).

4. Dispositif selon l'une des revendications précédentes, **caractérisé en ce que** ladite troisième face (1C) est inclinée d'un angle compris entre 40° et 60° par rapport à la première face (1A).

5. Dispositif selon l'une des revendications précédentes, **caractérisé en ce que** ladite deuxième face (1B) est inclinée d'un angle d'environ 110° par rapport à la première face (1A).

6. Dispositif selon l'une des revendications précédentes, **caractérisé en ce que** la longueur de la première face (1A) entre ladite deuxième face (1B) et ladite troisième face (1C) est comprise entre 15 et 30 cm.

7. Dispositif selon l'une des revendications précédentes, **caractérisé en ce que** ladite image (2) est une image présentant un fond noir et mat et au moins un motif blanc et mat.

8. Dispositif selon la revendication précédente, **caractérisé en ce que** ledit motif est réalisé sur un support translucide.

9. Dispositif selon la revendication 7 ou 8, **caractérisé en ce que** ledit motif comporte deux disques.

10. Dispositif selon l'une des revendications précédentes **caractérisé en ce que** l'intensité de la source de lumière (7) est ajustable.

11. Dispositif selon l'une des revendications précédentes, **caractérisé en ce que** ladite troisième face (1C) est dépolie.

12. Utilisation d'un dispositif selon l'une des revendications précédentes, **caractérisée en ce qu'**elle consiste à positionner une lentille (4A) pourvue sur une première moitié d'un premier traitement antireflet et pourvue sur une seconde moitié d'un second traitement antireflet, sur ledit orifice (4), avec sa face concave tournée vers l'extérieur, à regarder au travers de la lentille et à déterminer la gêne provoquée par la visualisation du reflet résultant sur ledit miroir (3) lors de la lecture dudit texte (5), pour comparer le niveau de réflexion du reflet de ladite image (2) réfléchie sur ladite première moitié et sur ladite seconde moitié.

13. Utilisation du dispositif selon la revendication 11, **caractérisée en ce que** l'observation est binoculaire.

## Patentansprüche

1. Vorrichtung zur Demonstration und Prüfung der Wirksamkeit einer Antireflexionsbehandlung einer ophthalmischen Linse, ein Teil (1) umfassend, das eine erste Fläche (1A) zur Abstützung eines Bildes (2) und eine zweite Fläche (1B) zur Abstützung eines Spiegels (3), welcher halbreflektierend ist, aufweist, **dadurch gekennzeichnet, dass** das Bild (2) von einer Lichtquelle (7) hinterleuchtet wird, die zweite Fläche (1B) einen Winkel von wenigstens 90° in Bezug auf die erste Fläche bildet und gegenüber einer dritten Fläche (1C) zur Positionierung wenigstens einer ophthalmischen Linse (4A) mit nach außen gewandter konkaver Fläche derselben angeordnet ist, die mit einer Anordnung zur Positionierung der Linse versehen ist, die wenigstens eine auf der dritten Fläche angeordnete Öffnung (4) umfasst, wobei die Vorrichtung außerdem einen Text (5) auf einem durchsichtigen Träger hinter dem Spiegel und eine einheitlich gefärbte Fläche (6) hinter dem Text aufweist, derart, dass, wenn ein Benutzer durch die Öffnung (4) und die Linse (4A) hindurchschaut, er mittels des Spiegels (3) den aus dem Bild (2) resultierenden Reflex auf der Linse (4A) sichtbar macht, der sich dem Text (5) und der einheitlich gefärbten Fläche (6) überlagert.

2. Vorrichtung nach Anspruch 1, **dadurch gekennzeichnet, dass** der Text von schwarzer Farbe ist und die Fläche von weißer Farbe ist.

3. Vorrichtung nach einem der vorhergehenden Ansprüche, **dadurch gekennzeichnet, dass** das Teil (1) ein U-Profilteil ist, dessen Schenkel die zweite Fläche (1B) und die dritte Fläche (1C) stützen.

4. Vorrichtung nach einem der vorhergehenden Ansprüche, **dadurch gekennzeichnet, dass** die dritte Fläche (1C) um einen Winkel zwischen 40° und 60° in Bezug auf die erste Fläche (1A) geneigt ist.

5. Vorrichtung nach einem der vorhergehenden Ansprüche, **dadurch gekennzeichnet, dass** die zweite Fläche (1B) um einen Winkel von ungefähr 110° in Bezug auf die erste Fläche (1A) geneigt ist.

6. Vorrichtung nach einem der vorhergehenden Ansprüche, **dadurch gekennzeichnet, dass** die Länge der ersten Fläche (1A) zwischen der zweiten Fläche (1B) und der dritten Fläche (1C) zwischen 15 und 30 cm beträgt.

7. Vorrichtung nach einem der vorhergehenden Ansprüche, **dadurch gekennzeichnet, dass** das Bild (2) ein Bild ist, das einen schwarzen und matten Hintergrund und wenigstens ein schwarzes und mattes Motiv aufweist.

8. Vorrichtung nach dem vorhergehenden Anspruch, **dadurch gekennzeichnet, dass** das Motiv auf einem durchscheinenden Träger dargestellt ist.

9. Vorrichtung nach Anspruch 7 oder 8, **dadurch gekennzeichnet, dass** das Motiv zwei Scheiben aufweist.

10. Vorrichtung nach einem der vorhergehenden Ansprüche, **dadurch gekennzeichnet, dass** die Intensität der Lichtquelle (7) verstellbar ist.

11. Vorrichtung nach einem der vorhergehenden Ansprüche, **dadurch gekennzeichnet, dass** die dritte Fläche (1C) mattiert ist.

12. Verwendung einer Vorrichtung nach einem der vorhergehenden Ansprüche, **dadurch gekennzeichnet, dass** sie darin besteht, eine Linse (4A), die auf einer ersten Hälfte mit einer ersten Antireflexionsbehandlung versehen ist und auf einer zweiten Hälfte mit einer zweiten Antireflexionsbehandlung versehen ist, auf der Öffnung (4) zu positionieren, so dass ihre konkave Fläche nach außen gewandt ist, durch die Linse zu schauen und die Beeinträchtigung zu bestimmen, die durch die Sichtbarmachung des resultierenden Reflexes auf dem Spiegel (3) beim Lesen des Textes (5) hervorgerufen wird, um die Reflexionsstärke des Reflexes des auf der ersten Hälfte und auf der zweiten Hälfte reflektierten Bildes (2) zu vergleichen.

13. Verwendung einer Vorrichtung nach Anspruch 11, **dadurch gekennzeichnet, dass** die Betrachtung eine binokulare Betrachtung ist.

## Claims

1. Device for demonstrating and testing the effectiveness of an antireflection treatment of an ophthalmic lens, including a part (1) having a first face (1A) for holding an image (2) and a second face (1B) for holding a half-silvered mirror (3), **characterized in that** said image (2) is backlit by a light source (7) and said second face (1B) makes an angle of at least 90° to said first face and is placed facing a third face (1C) for positioning at least one ophthalmic lens (4A) with its concave face turned outward, said third face being provided with a means for positioning said lens comprising at least one orifice (4) arranged in said third face, the device also including a text (5) on a transparent medium behind said mirror and a face (6) of uniform colour behind said text, so that, when a user looks through said orifice (4) and said lens (4A), he sees, by means of said mirror (3), the reflex resulting from reflection of said image (2) from said lens (4A) in superposition on said text (5) and on said face (6) of uniform colour.

2. Device according to Claim 1, **characterized in that** said text is black in colour and said face is white in colour.

3. Device according to one of the preceding claims, **characterized in that** said part (1) is a U-shaped profile the arms of which bear said second face (1B) and said first third face (1C).

4. Device according to one of the preceding claims, **characterized in that** said third face (1C) is inclined at an angle comprised between 40° and 60° to the first face (1A).

5. Device according to one of the preceding claims, **characterized in that** said second face (1B) is inclined at an angle of about 110° to the first face (1A).

6. Device according to one of the preceding claims, **characterized in that** the length of the first face (1A) between said second face (1B) and said third face (1C) is comprised between 15 and 30 cm.

7. Device according to one of the preceding claims, **characterized in that** said image (2) is an image comprising a black matte background and at least one white matte pattern.

8. Device according to the preceding claim, **characterized in that** said pattern is produced on a translucent medium.

9. Device according to Claim 7 or 8, **characterized in that** said pattern includes two discs.

10. Device according to one of the preceding claims, **characterized in that** the intensity of the light source (7) is adjustable.

11. Device according to one of the preceding claims, **characterized in that** said third face (1C) is frosted.

12. Use of a device according to one of the preceding claims, **characterized in that** it consists in positioning a lens (4A), a first half of said lens having a first antireflection treatment and a second half of said lens having a second antireflection treatment, on said orifice (4) with its concave face turned outward, in looking through the lens and in determining the annoyance caused by sight of the resulting reflex in said mirror (3) when reading said text (5), in order to compare the level of reflection of the reflex of said image (2) reflected from said first half and from said second half.

13. Use of the device according to Claim 11, **characterized in that** the observation is binocular.
